# DEMANDE DE BREVET EUROPEEN

(11) **EP 2 088 029 A1**
(43) Date de publication de la demande: **12.08.2009**
(21) Numéro de dépôt: 09150925.7
(22) Date de dépôt: 20.01.2009
(51) Int. Cl.: B60P 1/64, B60P 1/48

(54) **Dispositif de manutention pour le chargement et le déchargement d'un conteneur**

(30) Priorité: 07.02.2008 FR 0850789
(71) Demandeur: Guima Palfinger, 82300 Caussade (FR)
(72) Inventeur: Lagorce, Mathieu, 82300, MONTEILS (FR)
(74) Mandataire: Branger, Jean-Yves

(57) **Abrégé**

Ce dispositif, destiné à équiper le châssis d'un véhicule, comprend un bras en trois parties constitué par un basculeur (3) solidaire du châssis (CH), une bielle (1) articulée sur le basculeur (3) et actionnée par des vérins (4), et une potence (2) montée pivotante sur la bielle (1) et pourvue d'un crochet (20) de préhension du conteneur, une tringle de liaison articulée à la potence (2) et au basculeur (3) régissant l'orientation angulaire de la potence (2) de sorte que le crochet (20) décrit une trajectoire (T₁) en arc d'ellipse, basse et peu incurvée ; il est caractérisé par le fait que ladite tringle de liaison est composée de deux biellettes articulées l'une à l'autre, à savoir une biellette (6 ) « d'effort » disposée dans la zone de liaison de la bielle avec la potence, et une biellette (5) « de mouvement » s'étendant le long de la bielle (1), ces biellettes étant également articulées respectivement sur la bielle (1) et sur le basculeur (3), tandis que la potence (2) est articulée autour d'un pivot « flottant » (PF) solidaire de la biellette d'effort (6 ), un vérin hydraulique (7) faisant pivoter la potence (2) autour de ce pivot flottant (PF).

Equipement pour véhicules de transport de charges.

## Description

La présente invention concerne un dispositif de manutention destiné à équiper le châssis d'un véhicule pour le chargement et le déchargement d'un conteneur.

Elle concerne plus particulièrement un dispositif comprenant un bras articulé sur le châssis d'un véhicule, notamment d'un camion, et terminé par un crochet susceptible de coopérer avec un anneau solidaire de l'avant d'un conteneur pour prendre ce conteneur au sol et le déposer sur le châssis du véhicule et inversement prendre le conteneur sur le châssis et le déposer sur le sol, en faisant pivoter le conteneur sur l'arrière du châssis.

Le but principal de l'invention est de réaliser un dispositif de manutention du genre précité dans lequel le crochet du bras décrit une trajectoire faiblement incurvée autorisant une faible inclinaison du conteneur au cours des opérations de manutention et par suite facilitant la manutention de conteneurs ne pouvant subir une inclinaison importante, comme par exemple des bennes remplies de produits facilement versables (sable, graviers, etc.).

Un autre but de l'invention est de réaliser un dispositif de manutention de fonctionnement simple et de maniement aisé pour l'opérateur.

Pour atteindre ces buts, la présente invention concerne un dispositif de manutention destiné à équiper le châssis d'un véhicule pour le chargement et le déchargement d'un conteneur, ce dispositif comprenant un bras en trois parties constitué par un basculeur articulé sur l'arrière du châssis, une partie intermédiaire - ou bielle - articulée sur le basculeur et actionnée par au moins un vérin articulé sur le châssis, et une partie supérieure - ou potence - montée pivotante sur la bielle et pourvue à son extrémité libre d'un crochet apte à venir en prise avec un organe de préhension tel qu'un anneau solidaire de l'avant du conteneur, une tringle de liaison étant articulée d'une part, sur l'extrémité de la potence qui est opposée à son extrémité libre, et, d'autre part, sur le basculeur, par un axe d'articulation qui est décalé par rapport à l'axe d'articulation de la bielle sur le basculeur, de telle sorte que, lorsque la bielle pivote autour de son axe, cette tringle régit l'orientation angulaire de la potence par rapport à la bielle de telle façon que le crochet décrit une trajectoire en arc d'ellipse, ou approximativement en arc d'ellipse, moins incurvée et plus basse qu'un arc de cercle centré sur l'axe d'articulation de la bielle sur le basculeur, ce qui entraîne une faible inclinaison du conteneur durant son chargement ou son déchargement.

L'état de la technique en la matière peut être illustré par le document FR 2 451 841, qui décrit un dispositif de ce genre pourvu d'une tringle de liaison rigide, de longueur donnée et immuable ; la figure 1 de ce document montre la trajectoire T faiblement incurvée décrite par le crochet.

Cette solution est relativement simple et efficace.

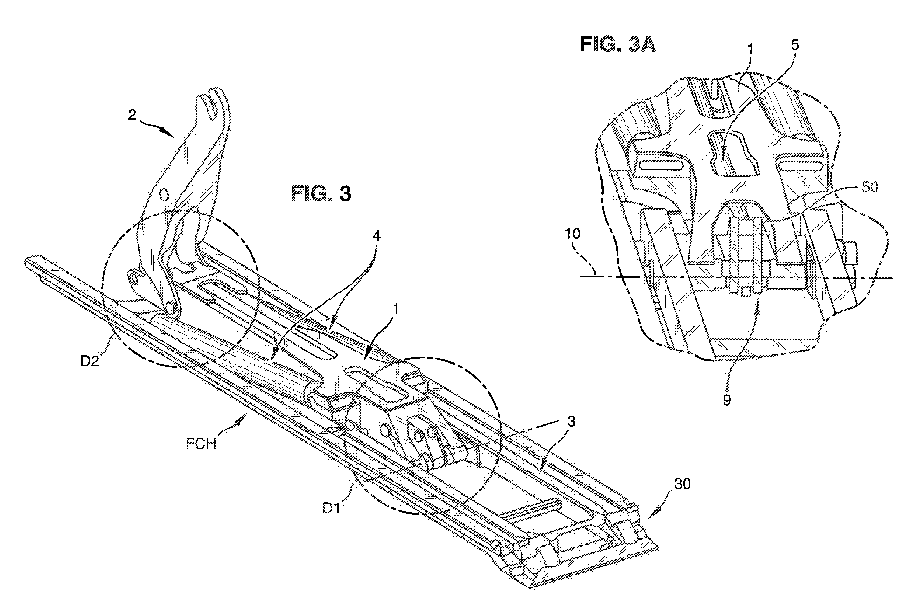

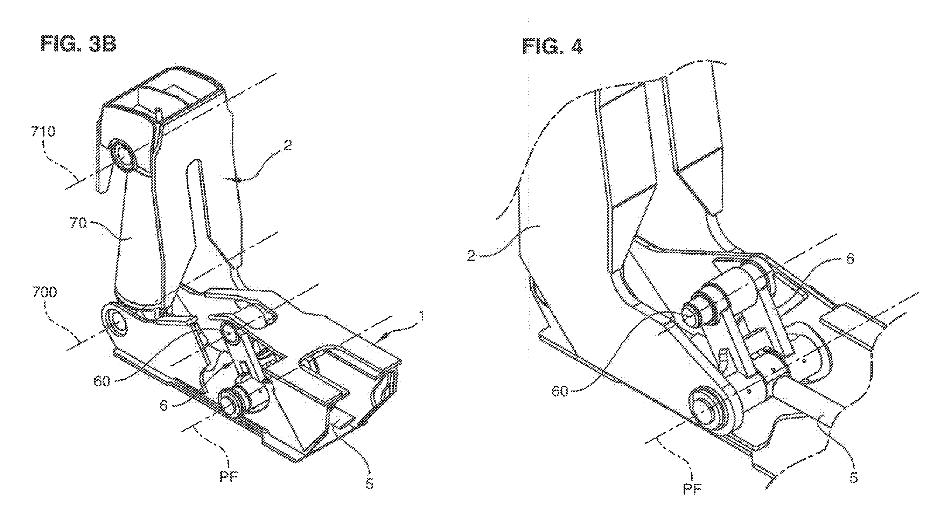

Elle présente néanmoins l'inconvénient que la position de fin de course du crochet, dans le sens du chargement, est figée. La bielle se trouve alors rabattue vers l'avant à plat sur le châssis, dans une position horizontale, tandis que la potence est dressée verticalement, comme cela est illustré sur la figure 3. La position longitudinale du conteneur sur le châssis, et la distance de sa face avant par rapport à la façade arrière de la cabine du camion est donc également figée et immuable.

Or il peut être intéressant de pouvoir régler le positionnement en longueur du conteneur sur le châssis, par exemple pour le rapprocher au plus près de la cabine, ou pour répartir au mieux la charge sur le châssis, notamment par rapport à la position des essieux.

A cet effet, il a été proposé dans le document FR 2 523 047 de substituer à la tringle rigide, de longueur déterminée, une liaison de longueur réglable, constituée par un vérin à double effet intégré dans la bielle, dont le corps est articulé sur le basculeur et dont la tige est articulée à son extrémité libre sur la potence.

Pendant les phases de chargement ou de déchargement du conteneur, représentées sur les figures 1 à 3 de ce document, ledit vérin peut être maintenu dans son état d'extension, de sorte qu'il possède une longueur constante et assure une fonction similaire à celle de la tringle rigide du dispositif décrit dans le FR 2451 841.

Cependant, en fin de chargement, la potence n'est pas dressée verticalement ; elle forme un angle aigu dirigé vers l'arrière et vers le haut par rapport à la verticale.

Après chargement, il est ainsi possible, en actionnant le vérin dans le sens de sa rétraction, de faire pivoter la potence vers l'avant, le crochet décrivant alors un arc de cercle qui a pour effet de déplacer le conteneur vers l'avant du châssis afin de le rapprocher de la cabine du camion sur une course additionnelle de longueur désirée, qui est fonction du degré de rétraction dudit vérin.

Outre, les opérations de chargement depuis le sol sur le châssis et de déchargement depuis le châssis sur le sol, ce genre de dispositif de manutention permet également de réaliser des opérations de bennage, c'est-à-dire de fonctionner en benne basculante.

Pour cela il est possible de faire pivoter en bloc le basculeur et la bielle, avec le conteneur dont ils sont solidaires, comme cela est illustré sur la figure 3 du FR 2 451 841 et la figure 5 du FR 2 523 047.

La solution proposée dans le FR 2 523 047 a donc essentiellement pour intérêt de permettre un ajustement du positionnement longitudinal du conteneur sur la benne.

Il a cependant pour inconvénient, du fait de l'intégration du vérin dans la bielle, que ces deux éléments lorsqu'ils sont rabattus à plat sur le châssis présentent un encombrement en hauteur relativement important. De plus, le vérin possède nécessairement une grande longueur et a corrélativement un coût élevé. Enfin, de par sa disposition, pour faire pivoter la potence par rapport à la bielle, et ainsi déplacer longitudinalement le conteneur, ce vérin doit développer des efforts très élevés.

L'invention vise à résoudre ces difficultés en proposant un dispositif du genre décrit ci-dessus, dans lequel le crochet décrit une trajectoire en arc d'ellipse, ou approximativement en arc d'ellipse, moins incurvée et plus basse qu'un arc de cercle, et donc favorable aux opérations de chargement et de déchargement d'un conteneur dans une position assez faiblement inclinée, ce dispositif permettant de réaliser de surcroît (comme avec le dispositif du 2 523 047) un ajustement du positionnement longitudinal du conteneur sur la benne grâce à un mouvement de pivotement additionnel du crochet, ce dispositif étant cependant peu encombrant et équipé d'un vérin de relative faible longueur et ne nécessitant pas la mise en oeuvre d'efforts très élevés pour réaliser ce pivotement additionnel du crochet.

Les objectifs indiqués plus haut sont atteints grâce au fait que, d'une part, la tringle de liaison est composée de deux biellettes articulées l'une à l'autre, l'une courte, dite « biellette d'effort », disposée dans la zone de liaison angulaire de la bielle avec la potence, et l'autre, longue, dite « biellette de mouvement » s'étendant pratiquement sur toute la longueur de ladite bielle, chacune de ces biellettes étant articulée, au niveau de son extrémité opposée à l'axe d'articulation commun aux deux biellettes, respectivement sur la bielle et sur le basculeur, et que, d'autre part, ladite potence est articulée autour d'un pivot dit « flottant » solidaire de la biellette d'effort et/ou de la biellette de mouvement, le dispositif comprenant en outre un moyen de commande, tel qu'un vérin, apte à faire pivoter la potence autour de ce pivot flottant.

Par ailleurs, selon un certain nombre de caractéristiques additionnelles possibles de l'invention:
- l'axe d'articulation de la biellette de mouvement sur le basculeur est positionné à un niveau au dessus de celui de l'axe d'articulation de la bielle sur le basculeur ;
- la potence présente une partie principale de forme générale sensiblement rectiligne et un appendice coudé par lequel il est articulé sur le pivot flottant ;
- ledit moyen de commande apte à faire pivoter la potence autour du pivot flottant est un vérin hydraulique à double effet, dit « vérin de potence », dont le corps est fixé, via un axe d'articulation, à l'extrémité libre de la bielle et dont la tige est fixée, également via un axe d'articulation, à la partie principale et rectiligne de la potence, l'axe du vérin de potence étant approximativement parallèle à la direction générale de cette partie principale ;
- les différents axes d'articulation de la bielle, de la biellette de mouvement, de la biellette de force, et de la potence, sont ainsi positionnés que, le vérin de potence étant bloqué de manière à conserver une longueur constante, l'angle β que forment entre elles la bielle et la partie principale de la potence est un angle aigu dont la valeur commence par décroître progressivement, atteint une valeur minimale, puis croît à nouveau progressivement, lorsqu'on fait pivoter la bielle de l'arrière vers l'avant autour de son axe d'articulation sur le basculeur afin de charger un conteneur sur le châssis du véhicule ;
- en fin de course de chargement du conteneur, ladite bielle se trouvant rabattue à plat et vers l'avant sur le châssis et la partie principale de ladite potence étant dirigée obliquement vers le haut et vers l'arrière, un actionnement du vérin de potence dans le sens de sa rétraction a pour effet de faire pivoter la potence de telle manière que sa partie principale se dresse dans une position sensiblement verticale, ce qui permet de déplacer longitudinalement le conteneur sur le châssis afin de le rapprocher de la cabine du véhicule, située à l'avant de ce châssis ;
- ladite bielle a la forme générale d'un profilé creux présentant deux parois latérales verticales parallèles, entre lesquelles sont disposées les biellettes de mouvement et d'effort ;
- la potence présente une partie en forme de chape par laquelle elle est reliée au pivot flottant, et dont les flasques enserrent lesdites parois latérales du profilé constituant la bielle, ces parois latérales présentant des lumières arquées autorisant le passage et le débattement de l'axe dudit pivot flottant ;
- l'axe dudit pivot flottant coïncide avec l'axe d'articulation la biellette de mouvement sur la biellette d' effort ;
- l'axe dudit pivot flottant est porté par la biellette d'effort et est décalé par rapport à l'axe d'articulation de la biellette de mouvement sur la biellette d'effort.

D'autres caractéristiques et avantages de l'invention apparaîtront à la lecture de la description qui va suivre, faite en référence aux dessins annexés sur lesquels :
La figure 1 est une vue de côté schématique d'un camion équipé d'un dispositif de manutention conforme à l'invention, cette vue étant destinée à illustrer le mode de chargement d'un conteneur sur le camion, en montrant la cinématique de mouvement du dispositif.
La figure 2 est une vue similaire, à plus grandes échelle, qui représente les éléments constituant ce dispositif.
La figure 3 est une vue générale, en perspective, des principaux composants du dispositif.
La figure 3A est une vue de détail, également en perspective, de la partie cerclée désignée D1 sur la figure 3.
La figure 3B est une vue de détail, également en perspective et avec arrachement de certaines pièces, de la partie cerclée désignée D2 sur la figure 3.
La figure 4 est une vue d'un détail de la figure 3B au niveau de la biellette d'effort et de ses articulations.
Les figures 5 et 6 représentent, en coupe axiale, la zone de liaison de la bielle et de la potence avec deux valeurs d'angle différentes.
La figure 7 est une vue analogue à la vue de la figure 2, sans le conteneur, cette vue étant destinée à expliquer comment cet angle varie au cours du pivotement de la bielle.
La figure 8 est un schéma montrant comment les différents composants du dispositif sont articulés les uns aux autres.
La figure 9 est une vue partielle, en coupe axiale, du dispositif au niveau de la biellette d'effort ;
La figure 10 est une vue similaire à la précédente, représentant une variante de la biellette d'effort.

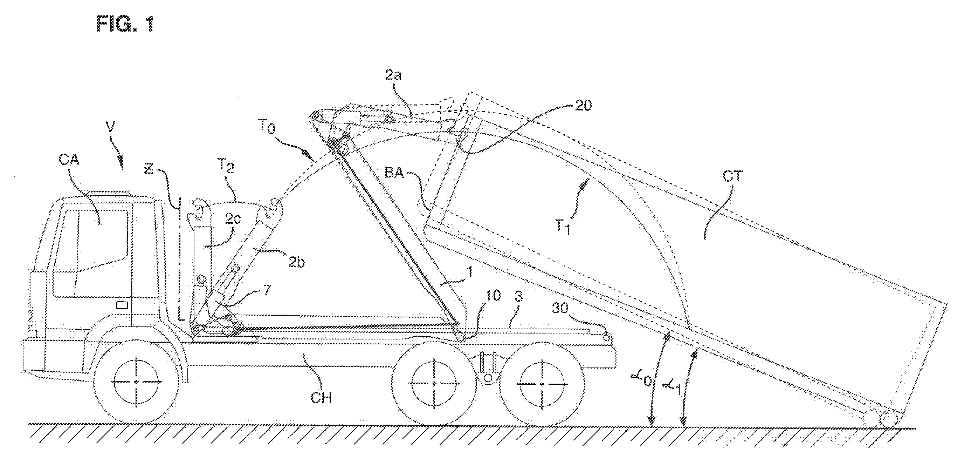

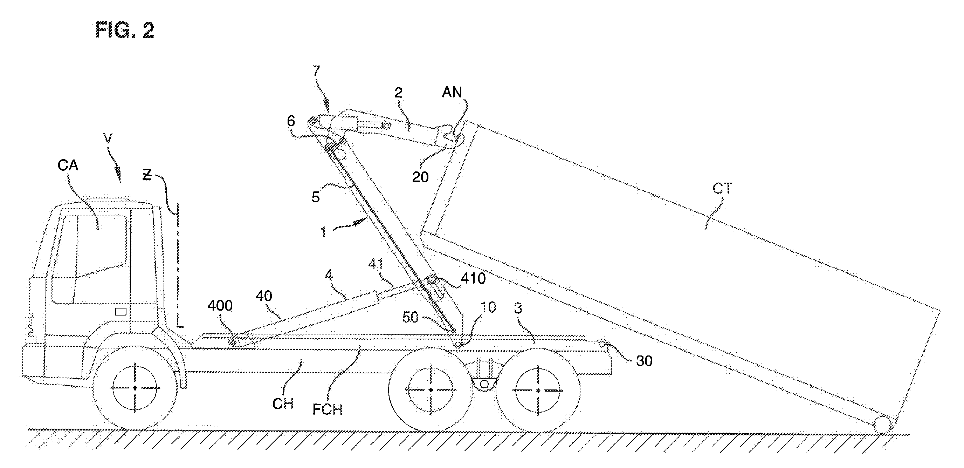

On a représenté sur les figures 1 et 2 un véhicule **V** constitué par un camion dont le châssis **CH** supporte un faux-châssis **FCH** sur lequel est monté un bras de manutention selon l'invention.

Ce bras est un bras en trois parties, constitué par un basculeur 3 articulé autour d'un axe 30 prévu à l'arrière du faux châssis **FCH,** une partie intermédiaire 1 - ou bielle - dont une extrémité est articulée autour d'un axe 10 au basculeur 3 et dont l'autre extrémité est articulée à une partie supérieure 2 - ou potence- , d'une manière qui sera exposée plus loin.

La potence 2 est pourvue à son extrémité libre d'un crochet 20 susceptible de coopérer avec un organe de préhension approprié, tel qu'anneau **AN,** solidaire de l'avant d'un conteneur **CT** reposant initialement sur le sol, et représenté sur les figures 1 et 2 au cours de son chargement sur le châssis du véhicule.

La bielle 1, comme on le voit notamment sur la figure 3, affecte la forme d'un profilé creux, à parois partiellement ouvertes, et dont le pivotement autour de l'axe 10 est commandé, de manière bien connue, par une paire de vérins de levage hydrauliques à double effet 4 disposés de chaque côté de la biellette et travaillant en synchronisme.

En référence à la figure 2, le corps 40 de ces vérins de levage est articulé au faux châssis **FCH** par un axe 400 ; leur tige 41 est articulée à la bielle 1 par un axe 410.

A l'état rétracté des vérins 4, la bielle 1 et ces vérins sont rabattus « à plat » sur le châssis, constituant alors avec le basculeur et le faux châssis un ensemble de relativement faible épaisseur au-dessus du châssis. Le conteneur, quant à lui possède des longerons adaptés pour prendre appui contre des organes de support complémentaires prévus sur le châssis, mais sans venir en contact avec cet ensemble.

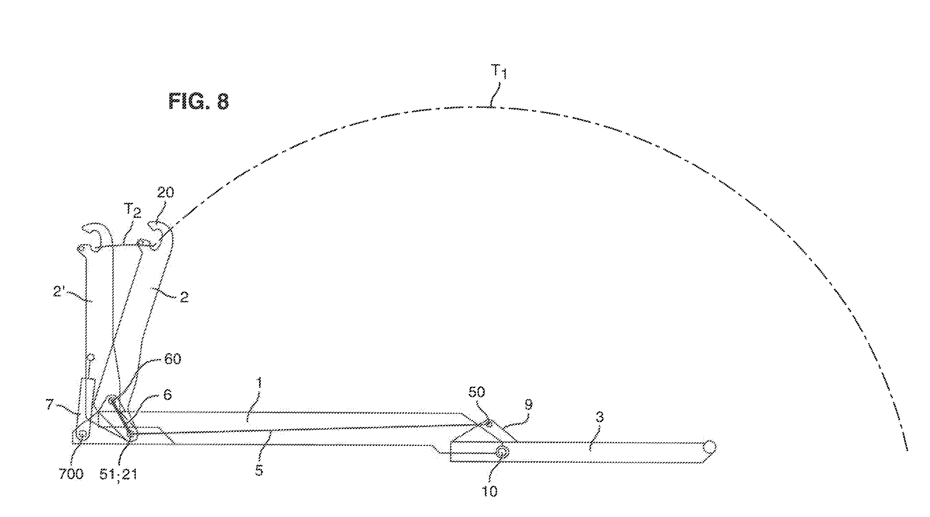

En référence notamment aux figures 2 et 8, on constate que le dispositif est pourvu d'une tringle de liaison entre le basculeur 3 et la potence 2. Cette tringle est composée de deux biellettes 5, 6, que l'on appellera respectivement biellette de mouvement et biellette d'effort.

La biellette de mouvement 5 est longue, approximativement de même longueur que la bielle 1. A l'une de ses extrémités, elle est articulée par un axe 50 sur une ferrure 9 en forme de chape solidaire du basculeur 3.

L'axe 50 est positionné un peu au-dessus et vers l'avant du châssis par rapport à l'axe 10.

A son autre extrémité, elle est articulée par un axe 51 à la biellette d'effort 6. Cette dernière, nettement plus courte, est donc articulée à la biellette d'effort à une l'une de ses extrémités par l'axe 51 précité, et à son autre extrémité à la bielle 1 par un axe 60.

Les deux biellettes 5 et 6 sont disposées à l'intérieur du profilé creux constituant la bielle 1.

La potence 2 a sensiblement la forme d'un « L » comprenant une partie principale rectiligne (la grande branche du « L ») dont l'extrémité libre porte le crochet 20 et dont la base est coudée sensiblement à angle droit, formant un appendice qui en constitue la partie secondaire (la petite branche du « L »).

Cette partie secondaire a la forme d'une chape dont les deux flasques enserrent la bielle 1, ainsi qu'on peut le voir notamment sur la figure 3.

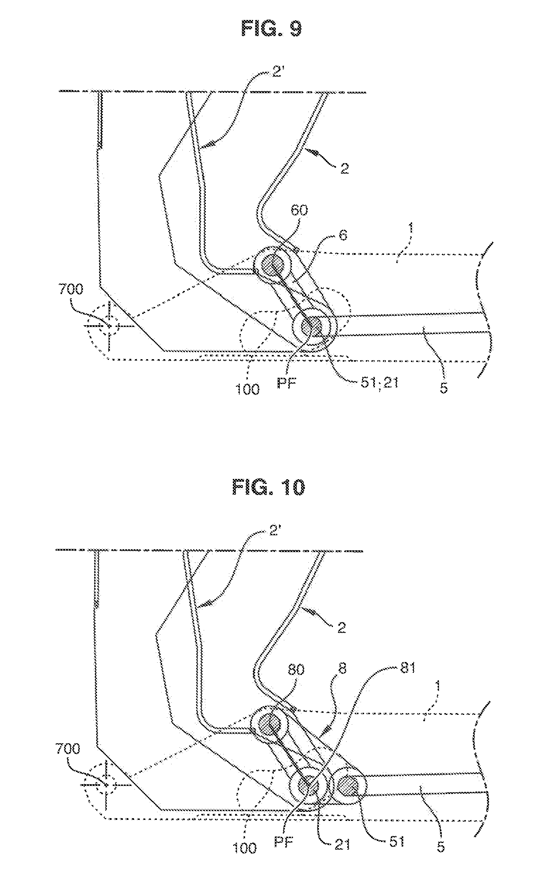

La potence 2 est articulée, par l'intermédiaire de ces flasques, autour d'un axe 21 qui, dans le premier mode de réalisation illustré (correspondant à la figure 9) coïncide avec l'axe 51 d'articulation mutuelle des deux biellettes 5 et 6.

Cet axe constitue ainsi pour la potence 2 un pivot **PF** « flottant », c'est-à-dire à position variable.

Les portions d'extrémité de ce pivot flottant traversent des ouvertures appropriées 100, en forme de lumières en arc de cercle centrées sur l'axe 60, ménagées dans les parois latérales de la bielle 1, autorisant ainsi les mouvements et le débattement angulaire nécessaires du pivot **PF.**

Comme cela se voit notamment sur les figures 1 et 8, lorsque la potence se trouve en position dressée, sensiblement verticale -position qui est référencée 2c sur la figure 1, et 2' sur la figure 8, sa partie inférieure secondaire est tournée vers l'arrière du châssis.

Le pivotement de la potence 2 autour de son pivot flottant est commandé par un vérin hydraulique à double effet 7, que l'on désignera ci-après « vérin de potence ».

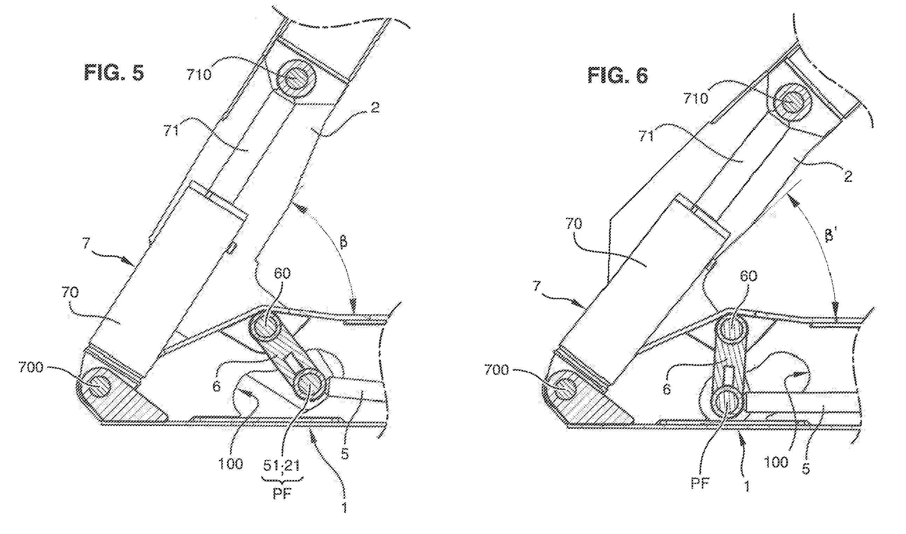

En se référant aux figures 5 et 6, on observe que celui-ci comprend un corps 70 articulé autour d'un axe 700 monté à l'extrémité libre de la bielle 1 et une tige 71 dont l'extrémité libre est solidaire, via un axe d'articulation 710, de la partie principale rectiligne de la potence 2 ; l'axe du vérin 7 est approximativement parallèle à la direction longitudinale de cette partie principale.

Tous les axes d'articulation du dispositif dont il a été fait état plus haut sont parallèles les uns aux autres, et disposés horizontalement, transversalement par rapport à la direction longitudinale du châssis **CH**.

Sur certaines figures, on a désigné par la référence β l'angle que forme la direction longitudinale de la partie principale rectiligne de la potence avec la direction longitudinale de la bielle 1.

Cet angle β est aigu.

A la simple comparaison des figures 5 et 6 on comprend aisément qu'en raison du caractère flottant du pivot **PF**, cet angle a une valeur qui peut varier en fonction du déplacement axial de la biellette de mouvement 5 par rapport à la bielle 1, déplacement qui induit le pivotement de la biellette d'effort 6 autour de l'axe 60, même si le vérin de potence 7 n'est pas activé, mais est bloqué (par isolement de ses deux chambres) de sorte qu'il conserve une longueur constante, (valeur invariable d'entraxe des axes 700 et 710).

L'axe 710 décrit alors un arc de cercle centré sur l'axe 700, tandis que le pivot flottant décrit un arc de cercle centré sur l'axe 60.

Le déplacement de la biellette de mouvement 5 vers l'extrémité libre de la bielle 1 (rapprochement de **PF** par rapport à l'axe 700) engendre une augmentation de l'angle β qui devient β' (β' > β).

Lors d'une opération de chargement d'un conteneur sur le châssis du véhicule ou, au contraire, de déchargement du conteneur, le basculeur 3 est maintenu fixe par rapport au châssis.

Son pivotement (autour de l'axe 30) en bloc avec le dispositif et le conteneur n'est réalisé qu'en cas de bennage du conteneur, opération qui se fait de manière classique à l'aide des vérins 4.

Dans la suite de la description, on ne s'intéressera pas à cette opération si bien qu'on pourra considérer que les axes 10 et 50 sont fixes par rapport au châssis.

Les positions relatives des axes 10 et 50 et les longueurs respectives de la bielle 1 et de la biellette de mouvement 5 sont telles que lorsque la bielle 1 pivote de l'arrière vers l'avant du châssis, par rétraction du jeu de vérins de levage 4, depuis une position initiale favorable à la préhension du conteneur posé au sol, jusqu'à une position de chargement du conteneur sur le châssis, le vérin de potence 7 étant bloqué en extension, l'angle β commence par décroître progressivement, passe par un minimum, puis croît progressivement jusqu'à une valeur maximum.

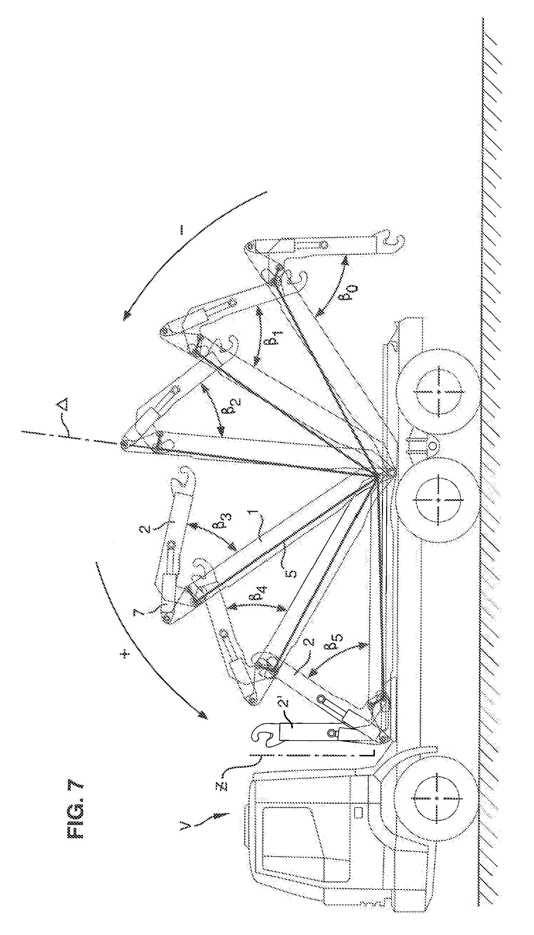

Ce processus est illustré sur la figure 7, où β₀ est l'angle initial de valeur maximale, β₁ un angle intermédiaire au cours de sa décroissance « - », β₂ l'angle minimal, β₃ et β₄ des angles intermédiaires au cours de sa croissance « + », β₅ l'angle maximal.

La droite Δ montre l'inclinaison de la biellette de mouvement 5 lorsque la bielle 1 occupe une position dressée, pratiquement verticale, correspondant à l'angle β₂ minimal. Le pivot flottant est alors rapproché au maximum de l'axe 700, à l'extrémité des lumières 100, dans une position correspondant à la figure 6.

A titre indicatif, les valeurs des angles β précités sont les suivantes :
B₀ = 58°
B₁ = 48°
β₂ = 43°
β₃ = 45°
β₄ = 48°
β₅ = 58°

Comme on le comprend aisément à l'observation de la figure 1, cette variation de l'angle β₂ fait que la trajectoire **T₁** décrite par le crochet 20 est une trajectoire sensiblement en forme d'arc d'ellipse plus basse et moins incurvée que la trajectoire T₀ en arc de cercle qu'il aurait suivie si l'angle β avait été constant.

Corrélativement, l'inclinaison α₁ du conteneur **CT** par rapport à l'horizontale est également réduite par rapport à l'inclinaison α₀ subie si la trajectoire avait été en arc de cercle.

Sur la figure 1, la référence **BA** désigne la paroi avant du conteneur **CT**.

Les références 2a et 2b désignent la potence 2 respectivement au cours et à la fin du chargement.

La première étape, du chargement proprement dit, se fait avec le vérin de potence 7 en extension, à l'état bloqué.

Son degré d'extension peut être ajusté de sorte que le crochet 20 s'engage correctement dans l'anneau de préhension **AN** du conteneur et reste bien en prise avec lui.

En fin de chargement, la potence 2 a sa partie principale dressée obliquement vers le haut et vers l'arrière, de l'angle β₅ précité par rapport à l'horizontale. Le conteneur est déposé horizontalement sur le châssis du véhicule, mais sa paroi avant **BA** se trouve à une distance non négligeable de la façade arrière de la cabine **CA** du camion.

Afin de réduire cette distance on peut déplacer axialement le conteneur sur le châssis du camion.

A cet effet, dans une seconde étape, on actionne le vérin de potence 7 dans le sens de sa rétraction, ce qui a pour effet de faire pivoter la potence 2 autour du pivot flottant PF (devenu fixe à l'issue de la première étape).

Le crochet 20 décrit une trajectoire **T₂** en arc de cercle.

En fin de course, la potence, référencée 2c, occupe une position dressée sensiblement verticale.

En jouant sur le degré de rétraction du vérin de potence 7 on peut ajuster la position de fin de course **Z** du bord avant **BA** du conteneur **CT** afin de le rapprocher plus ou moins de la façade arrière de la cabine.

Après chargement et ajustement longitudinal correct du conteneur, on solidarise celui-ci du châssis au moyen d'organes de fixation appropriés de type connu.

Le déchargement du conteneur et sa dépose au sol se font par des commandes inverses de celles venant d'être décrites.

Sur la variante du dispositif illustrée sur la figure 10, la biellette d'effort 8 présente, vue de côté, une configuration triangulaire ; le dispositif est ainsi agencé que l'axe **PF** du pivot flottant n'est pas confondu avec l'axe 51 d'articulation de la biellette de mouvement 5 sur cette biellette d'effort.

L'axe 21 d'articulation de la potence 2 sur la biellette d'effort 8, qui constitue ce pivot flottant, est légèrement décalé vers l'extrémité libre de la bielle 1 par rapport à l'axe 51.

Le mode de fonctionnement du dispositif est tout à fait similaire à celle du mode de réalisation ci-dessus décrit, la cinématique de certaines pièces mobiles étant seulement légèrement différente.

## Revendications

1. Dispositif de manutention destiné à équiper le châssis d'un véhicule pour le chargement et le déchargement d'un conteneur, ce dispositif comprenant un bras en trois parties constitué par un basculeur (3) articulé sur l'arrière du châssis (CH), une partie intermédiaire (1) - ou bielle - articulée sur le basculeur (3) et actionnée par au moins un vérin (4) articulé sur le châssis (CH), et une partie supérieure (2) - ou potence - montée pivotante sur la bielle (1) et pourvue à son extrémité libre d'un crochet (20) apte à venir en prise avec un organe de préhension (AN) tel qu'un anneau solidaire de l'avant du conteneur (CT), une tringle de liaison étant articulée d'une part, sur l'extrémité de la potence (2) qui est opposée à son extrémité libre, et, d'autre part, sur le basculeur (3), par un axe d'articulation (50) qui est décalé par rapport à l'axe d'articulation (10) de la bielle (1) sur le basculeur (3), de telle sorte que, lorsque la bielle (1) pivote autour de son axe (10), cette tringle régit l'orientation angulaire de la potence (2) par rapport à la bielle (1) de telle façon que le crochet (20) décrit une trajectoire (T₁) en arc d'ellipse, ou approximativement en arc d'ellipse, moins incurvée et plus basse qu'un arc de cercle (T₀) centré sur l'axe d'articulation (10) de la bielle sur le basculeur, **caractérisé par le fait que**, d'une part, ladite tringle de liaison est composée de deux biellettes articulées l'une à l'autre, l'une courte (6 ; 8), dite « biellette d'effort », disposée dans la zone de liaison angulaire de la bielle avec la potence, et l'autre longue (5), dite «biellette de mouvement » s'étendant pratiquement sur toute la longueur de ladite bielle (1), chacune de ces biellettes (6 ; 8, 5) étant articulée, au niveau de son extrémité opposée à l'axe d'articulation (51) commun aux deux biellettes, respectivement sur la bielle (1) et sur le basculeur (3), et que, d'autre part, ladite potence (2) est articulée autour d'un pivot dit « flottant » (PF) solidaire de la biellette d'effort (6 ; 8) et/ou de la biellette de mouvement (5), le dispositif comprenant en outre un moyen de commande, tel qu'un vérin (7), apte à faire pivoter la potence (2) autour de ce pivot flottant (PF).

2. Dispositif de manutention selon la revendication 1, **caractérisé par le fait que** l'axe (50) d'articulation de la biellette de mouvement (5) sur le basculeur (3) est positionné à un niveau au dessus de celui de l'axe (10) d'articulation de la bielle (1) sur le basculeur (3).

3. Dispositif de manutention selon la revendication 1 ou la revendication 2, **caractérisé par le fait que** la potence (2) présente une partie principale de forme générale sensiblement rectiligne et un appendice coudé par lequel il est articulé sur le pivot flottant.

4. Dispositif de manutention selon la revendication 3, **caractérisé par le fait que** ledit moyen de commande apte à faire pivoter la potence autour du pivot flottant est un vérin hydraulique à double effet (7), dit vérin de potence, dont le corps (70) est fixé, via un axe d'articulation (700), à l'extrémité libre de la bielle (1) et dont la tige (71) est fixée, également via un axe d'articulation (710), à la partie principale et rectiligne de la potence (2), l'axe du vérin de potence (7) étant approximativement parallèle à la direction générale de cette partie principale.

5. Dispositif de manutention selon la revendication 4, **caractérisé par le fait que** les différents axes d'articulation de la bielle (1), de la biellette de mouvement (5), de la biellette de force (6 ; 8), et de la potence (2), sont ainsi positionnés que, le vérin de potence (7) étant bloqué de manière à conserver une longueur constante, l'angle β que forment entre elles la bielle (1) et la partie principale de la potence (2) est un angle aigu dont la valeur commence par décroitre progressivement, atteint une valeur minimale, puis croît à nouveau progressivement, lorsqu'on fait pivoter la bielle de l'arrière vers l'avant autour de son axe d'articulation sur le basculeur afin de charger un conteneur (CT) sur le châssis (CH) du véhicule.

6. Dispositif de manutention selon les revendications 4 et 5 prises en combinaison, **caractérisé par le fait qu'**en fin de course de chargement du conteneur (CT), ladite bielle (1) se trouvant rabattue à plat vers l'avant sur le châssis (CH) et la partie principale de ladite potence (2) étant dirigée obliquement vers le haut et vers l'arrière, un actionnement dudit vérin de potence (7) dans le sens de sa rétraction a pour effet de faire pivoter la potence (2) de telle manière que sa partie principale se dresse dans une position sensiblement verticale, ce qui permet de déplacer longitudinalement le conteneur (CT) sur le châssis (CH) afin de le rapprocher de la cabine (CA) du véhicule, située à l'avant de ce châssis.

7. Dispositif de manutention selon l'une quelconque des revendications précédentes, **caractérisé par le fait que** ladite bielle (1) a la forme générale d'un profilé creux présentant deux parois latérales verticales parallèles, entre lesquelles sont disposées les biellettes de mouvement (5) et d'effort (6 ; 8).

8. Dispositif de manutention selon la revendication 7, **caractérisé par le fait que** la potence présente une partie en forme de chape par laquelle elle est reliée au pivot flottant (PF), et dont les flasques enserrent lesdites parois latérales du profilé constituant la bielle (1), ces parois latérales présentant des lumières arquées (100) autorisant le passage et le débattement de l'axe dudit pivot flottant (PF).

9. Dispositif de manutention selon l'une quelconque des revendications précédentes, **caractérisé par le fait que** l'axe dudit pivot flottant (PF) coïncide avec l'axe d'articulation (51) de la biellette de mouvement (5) sur la biellette d'effort (6).

10. Dispositif de manutention selon l'une quelconque des revendications 1 à 8, **caractérisé par le fait que** l'axe (81) dudit pivot flottant (PF) est porté par la biellette d'effort (8) et est décalé par rapport à l'axe d'articulation (51) de la biellette de mouvement (5) sur la biellette d'effort (8).
